# EUROPÄISCHE PATENTSCHRIFT

(11) **EP 1 370 389 B1**
(45) Veröffentlichungstag und Bekanntmachung des Hinweises auf die Patenterteilung: **09.03.2005**
(21) Anmeldenummer: 01974021.6
(22) Anmeldetag: 06.09.2001
(51) Int. Cl.: B23Q 3/12, B25D 17/08

(54) **HANDWERKZEUGMASCHINE MIT EINER ABNEHMBAREN WERKZEUGHALTERUNG**
HAND MACHINE TOOL WITH A REMOVABLE TOOL HOLDER
MACHINE-OUTIL A MAIN POURVUE D'UN PORTE-OUTIL AMOVIBLE

(30) Priorität: 22.09.2000 DE 10047021
(43) Veröffentlichungstag der Anmeldung: 17.12.2003
(73) Patentinhaber: ROBERT BOSCH GMBH, 70442 Stuttgart (DE)
(72) Erfinder: SAUR, Dietmar, 72810 Gomaringen (DE); KUHNLE, Axel, 71691 Freiberg a. N. (DE); WANEK, Helmut, 74366 Kirchheim/Neckar (DE)
(86) Internationale Anmeldenummer: PCT/DE2001/003415
(87) Internationale Veröffentlichungsnummer: WO 2002/024403

(56) Entgegenhaltungen:
- DE-A- 4 445 597
- DE-A- 19 857 774
- DE-A- 19 914 577
- US-A- 5 437 465

## Beschreibung

Die Erfindung geht aus von einer Handwerkzeugmaschine mit einer abnehmbaren Werkzeughalterung nach dem Oberbegriff des Anspruchs 1.

Aus der DE 196 21 610 A1 ist eine Handwerkzeugmaschine mit einer abnehmbaren. Werkzeughalterung bekannt. Die Handwerkzeugmaschine besitzt eine Spindelhülse, in die ein Grundkörper der Werkzeughalterung einsteckbar und mittels Verriegelungskörpern verriegelbar ist. Die Verriegelungskörper sind in der Spindelhülse verliersicher gehalten und werden in einer Verriegelungsstellung von einem Sicherungskörper radial überdeckt. Zum Abnehmen der Werkzeughalterung ist der Sicherungskörper über eine Betätigungshülse axial in eine die Verriegelungskörper radial freigebende Stellung verschiebbar.

### Vorteile der Erfindung

Die Erfindung geht aus von einer Handwerkzeugmaschine, insbesondere von einem Bohr- und/oder Schlaghammer, mit einem Schlagwerk, über das ein Werkzeug in einer Werkzeughalterung schlagend antreibbar ist, die mit ihrem Grundkörper lösbar an einem Antriebsteil über zumindest einen Verriegelungskörper befestigbar ist, der in seiner Eingriffsstellung von einem sicherungskörper radial fixierbar ist,-welcher mit Hilfe eines Betätigungselements zur Entriegelung der Werkzeughalterung aus seiner Verriegelungsstellung in eine den Verriegelungskörper radial freigebende Entriegelungsstellung führbar ist, wobei der Sicherungskörper durch ein korrespondierendes Bauteil beim Aufschieben der Werkzeughalterung auf das Antriebsteil in seine Entriegelungsstellung entgegen einer Federkraft eines Federelements verschiebbar ist.

Es wird vorgeschlagen, daß der Sicherungskörper am Antriebsteil verliersicher gehalten und durch das Betätigungselement in Aufschieberichtung der Werkzeughalterung entgegen einer Federkraft eines Federelements in seine Entriegelungsstellung führbar ist. Die Betätigungsrichtung des Betätigungselements zum Entriegeln des Sicherungskörpers der Werkzeughalterung ist vorteilhaft einem in Betätigungsrichtung wirkenden Leerlaufimpuls entgegen gerichtet, wodurch ein selbständiges Lösen sicher vermieden und insbesondere bei leistungsstarken Bohr- und Meißelhämmern eine sichere Befestigung der abnehmbaren Werkzeughalterung erreicht werden kann.

Der Sicherungskörper kann durch die Anordnung am Antriebsteil vorteilhaft beim Befestigen der Werkzeughalterung durch ein Bauteil an der Werkzeughalterung automatisch in seine Entriegelungsstellung ausgelenkt werden. Eine Entriegelungsbewegung des Sicherungskörpers beim automatischen Entriegeln zum Befestigen der Werkzeughalterung am Antriebsteil und eine Entriegelungsbewegung des Sicherungskörpers beim manuellen Entriegeln zum Lösen der Werkzeughalterung vom Antriebsteil können vorteilhaft in dieselbe Richtung und gegen dieselbe Druckfeder ausgeführt werden.

Umschließt der Grundkörper der Werkzeughalterung im befestigten Zustand zumindest einen Teil des Antriebsteils, kann eine besonders robuste und konstruktiv einfache Ausführung erreicht werden. Zwischen einem Döpper des Schlagwerks und dem Antriebsteil kann eine Spaltdichtung ausgebildet werden, die eine Antriebseinheit der Handwerkzeugmaschine gegen Schmutz schützt. Ein geringer Verschleiß kann erreicht und Beschädigungen beim Einführen des Werkzeugs können vermieden werden. Ferner kann der Verriegelungskörper vorteilhaft am Grundkörper der Werkzeughalterung befestigt werden, wodurch der Verriegelungskörper im Bedarfsfall leicht ersetzt oder mit der Werkzeughalterung ausgetauscht werden kann.

In einer weiteren Ausgestaltung der Erfindung wird vorgeschlagen, daß ein zumindest mit dem Antriebsteil in Wirkverbindung stehendes Bauteil und besonders vorteilhaft eine an das Antriebsteil angeformte Verzahnung den Verriegelungskörper beim Aufschieben der Werkzeughalterung radial nach außen und der Verriegelungskörper den Sicherungskörper aus seiner Verriegelungsstellung in seine Entriegelungsstellung verschiebt. Zusätzliche Bauteile, Bauraum, Gewicht und Montageaufwand können eingespart werden. Grundsätzlich ist jedoch auch denkbar, daß der Sicherungskörper beim Aufschieben der Werkzeughalterung von einem vom Verriegelungskörper getrennten Bauteil aus seiner Verriegelungsstellung in seine Entriegelungsstellung geführt wird.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird.die Merkmale zweckmäßigerweise auch einzeln betrachten und zu sinnvollen weiteren Kombinationen zusammenfassen.

Es zeigen:
- Fig. 1: einen schematisch dargestellten Bohrhammer,
- Fig. 2: einen Ausschnitt II des Bohrhammers aus Fig. 1 mit einer abnehmbaren Werkzeughalterung im Teilschnitt,
- Fig. 3: die Werkzeughalterung aus Fig. 2 im manuell entriegelten Zustand,
- Fig.4: die Werkzeughalterung aus Fig. 2 beim Abziehen von einem Antriebsteil und
- Fig. 5: die Werkzeughalterung aus Fig. 2 beim Aufschieben auf das Antriebsteil.

### Beschreibung des Ausführungsbeispiels

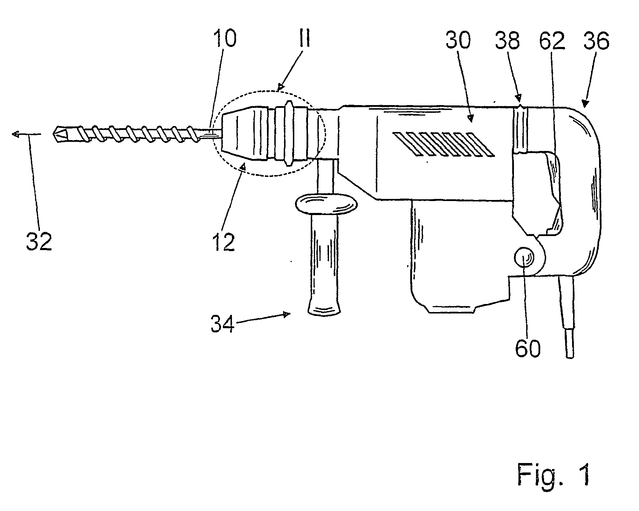

Fig. 1 zeigt einen Bohrhammer mit einem in einem Gehäuse 30 nicht näher dargestellten Elektromotor sowie einem Getriebe und einem Schlagwerk, über die ein in einer Werkzeughalterung 12 eingespanntes Werkzeug 10 bzw. ein eingespannter Bohrer drehend und schlagend antreibbar ist. Entgegen einer Betätigungsrichtung 32 ist nach der Werkzeughalterung 12 ein erster, sich senkrecht zur Betätigungsrichtung 32 erstreckender Handgriff 34 am Gehäuse 30 befestigt. Auf einer dem Werkzeug 10 abgewandten Seite des Gehäuses 30 ist ein zweiter, sich senkrecht zur Betätigungsrichtung 32 erstreckender, bügelförmiger Handgriff 36 angeordnet, der an einem von einer Werkzeugachse abgewandten ersten Ende über ein Gelenk 60 mit einer quer zur Betätigungsrichtung 32 verlaufenden Schwenkachse mit dem Gehäuse 30 verbunden ist. An einem zweiten Ende ist der Handgriff 36 über eine Isoliervorrichtung 38 mit dem Gehäuse 30 verbunden. Am Handgriff 36 ist ein von einer Schaltwippe gebildeter Betätigungsschalter 62 angeordnet.

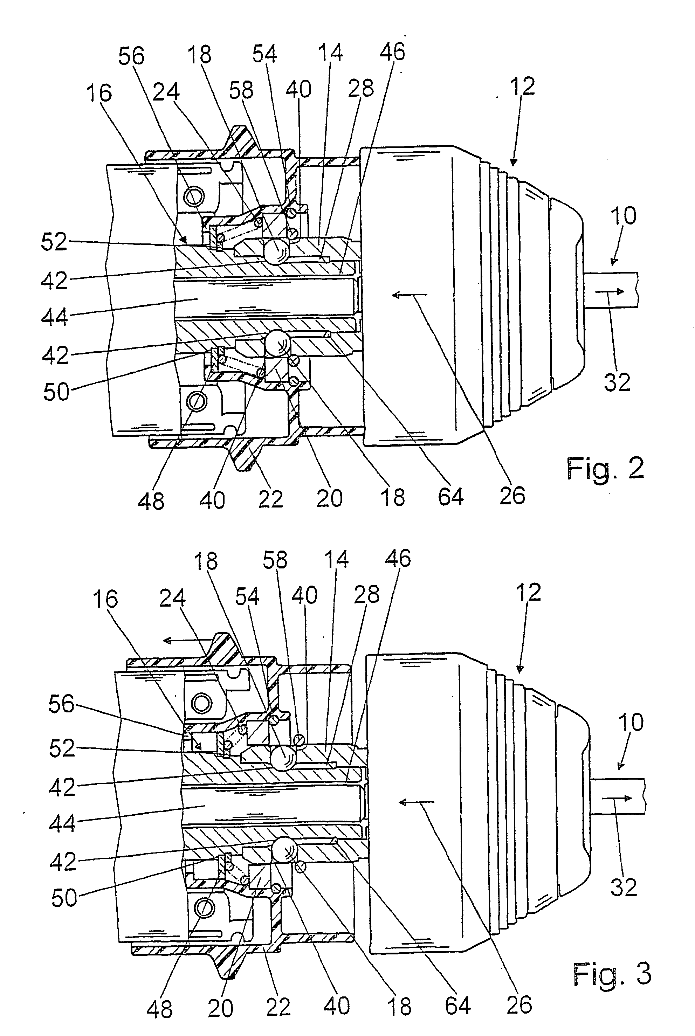

Die Werkzeughalterung 12 ist mit ihrem Grundkörper 14 lösbar an einem von einem Spindelrohr gebildeten Antriebsteil 16 über drei gleichmäßig über den Umfang verteilte Verriegelungskörper 18 befestigt (Fig. 2). Der Grundkörper 14 besitzt zum Antriebsteil 16 einen größeren Durchmesser als das Antriebsteil 16 und umschließt diesen. Radial innerhalb des Antriebsteils 16 ist ein Döpper 44 des nicht näher dargestellten Schlagwerks angeordnet, wobei zwischen dem Döpper 44 und dem Antriebsteil 16 eine Spaltdichtung 46 ausgebildet ist.

Die als Kugeln ausgebildeten Verriegelungskörper 18 sind jeweils in Ausnehmungen 40 im Grundkörper 14 der Werkzeughalterung 12 angeordnet und greifen radial nach innen in an das Antriebsteil 16 angeformte kalottenförmige Ausnehmungen 42. Grundsätzlich wäre anstatt kalottenförmigen Ausnehmungen auch eine umlaufende Nut denkbar. Die kalottenförmigen Ausnehmungen 42 sind in Aufschieberichtung 26 der Werkzeughalterung 12 nach einer an das Antriebsteil 16 angeformten Außenverzahnung 28 angeordnet.

Die Verriegelungskörper 18 sind in ihrer Bewegung radial nach außen durch einen ringförmigen Sicherungskörper 20 blockiert bzw. in ihrer Eingriffsstellung fixiert, der die Verriegelungskörper 18 radial überdeckt. Über die Verriegelungskörper 18 ist der Grundkörper 14 der Werkzeughalterung 12 in axialer Richtung und in Drehrichtung fest mit dem Antriebsteil 16 verbunden. Ferner ist der Grundkörper 14 in Drehrichtung über eine an den Grundkörper 14 angeformte Innenverzahnung 64, die in die an das Antriebsteil 16 angeformte Außenverzahnung 28 eingreift, fest mit dem Antriebsteil 16 verbunden.

Der Sicherungskörper 20 ist verliersicher am Antriebsteil 16 gehalten, und zwar innerhalb einer verschiebbar gelagerten Betätigungshülse 22, und ist zur Entriegelung der Werkzeughalterung 12 aus seiner Verriegelungsstellung durch die Betätigungshülse 22 in Aufschieberichtung 26 der Werkzeughalterung 12 entgegen einer Federkraft einer Schraubendruckfeder 24 in seine Entriegelungsstellung führbar (Fig. 3). Die Schraubendruckfeder 24 ist mit einem Ende in Aufschieberichtung 26 über eine Scheibe 48 an einem Absatz 50 des Antriebsteils 16 abgestützt. Die Scheibe 48 ist in Betätigungsrichtung 32 über einen Sicherungsring 52 am Antriebsteil 16 gesichert. Mit einem zweiten Ende wirkt die Schraubendruckfeder 24 in Betätigungsrichtung 32 auf den Sicherungskörper 20, der auf der dem Werkzeug 10 zugewandten Seite an seinem Außenumfang in Betätigungsrichtung 32 über einen Sprengring 54 auf die Betätigungshülse 22 wirkt, die im befestigten Zustand der Werkzeughalterung 12 (Fig. 1) in Betätigungsrichtung 32 mit einem radial nach innen weisenden Bund 56 über die Scheibe 48 und den Sicherungsring 52 am Antriebsteil 16 abgestützt ist.

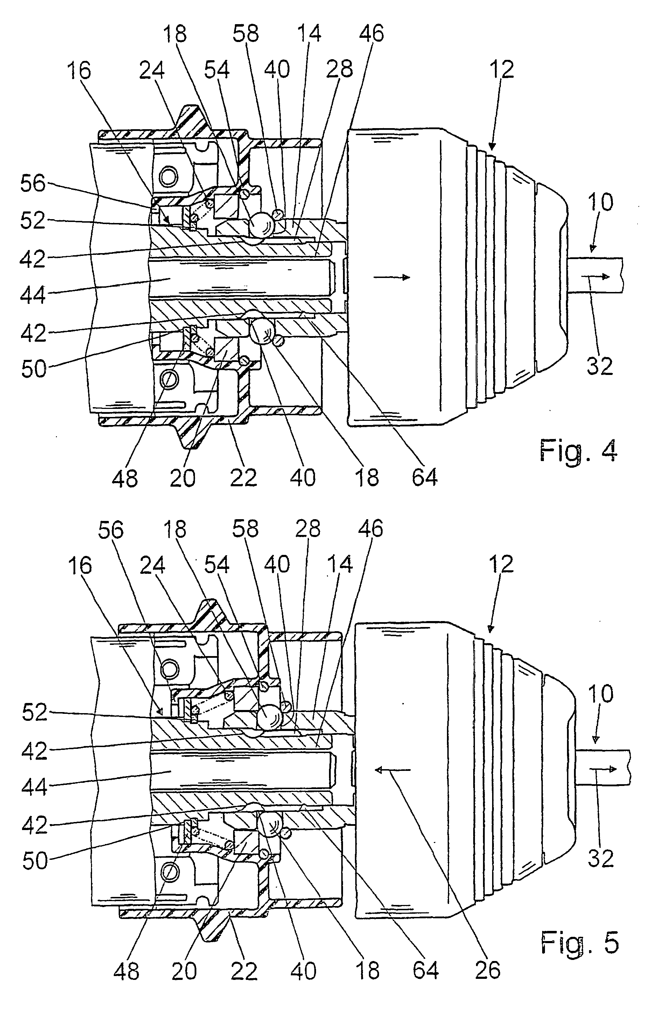

Beim manuellen Verschieben der Betätigungshülse 22 in Aufschieberichtung 26 zum Entriegeln der Werkzeughalterung 12, wird der Sicherungskörper 20 über den Sprengring 54 mit der Betätigungshülse 22 mitgenommen und gegen die Schraubendruckfeder 24 in seine Entriegelungsstellung verschoben (Fig. 3). Anschließend können die Verriegelungskörper 18 beim Abziehen der Werkzeughalterung 12 vom Antriebsteil 16 in Betätigungsrichtung 32 radial nach außen aus den Ausnehmungen 42 ausgelenkt werden (Fig. 4). Die Verriegelungskörper 18 sind verliersicher in den Ausnehmungen 40 im Grundkörper 14 der Werkzeughalterung 12 gehalten, und zwar radial nach innen durch angeformte Verengungen der Ausnehmungen 40 und radial nach außen durch einen am Grundkörper 14 befestigten Sprengring 58.

Beim Aufschieben des Grundkörpers 14 der Werkzeughalterung 12 in Aufschieberichtung 26 auf das Antriebsteil 16, wird die Werkzeughalterung 12 soweit gedreht, bis die an den Grundkörper 14 angeformte Innenverzahnung 64 mit der an das Antriebsteil 16 angeformten Außenverzahnung 28 in Eingriff gebracht werden kann. Die Verriegelungskörper 18 werden beim Aufschieben durch die Außenverzahnung 28 des Antriebsteils 16 radial nach außen ausgelenkt und kommen mit dem Sicherungskörper 20 zur Anlage. Bei einer fortgesetzten Aufschiebebewegung wird der Sicherungskörper 20 durch die Verriegelungskörper 18 in seine Entriegelungsstellung verschoben, und zwar automatisch bzw. ohne eine manuelle Betätigung der Betätigungshülse 22 (Fig. 5). Kommen die Verriegelungskörper 18 über den kalottenförmigen Ausnehmungen 42 im Antriebsteil 16 zum Liegen, werden diese durch die Schraubendruckfeder 24 über den Sicherungskörper 20 in die kalottenförmigen Ausnehmungen 42 radial nach innen ausgelenkt. Die Schraubendruckfeder 24 verschiebt anschließend den Sicherungskörper 20 in seine Verriegelungsstellung radial über die Verriegelungskörper 18 und die Werkzeughalterung 12 ist am Antriebsteil 16 fixiert.

### Bezugszeichen

- 10: Werkzeug
- 12: Werkzeughalterung
- 14: Grundkörper
- 16: Antriebsteil
- 18: Verriegelungskörper
- 20: Sicherungskörper
- 22: Betätigungselement
- 24: Federelement
- 26: Aufschieberichtung
- 28: Verzahnung
- 30: Gehäuse
- 32: Betätigungsrichtung
- 34: Handgriff
- 36: Handgriff
- 38: Isoliervorrichtung
- 40: Ausnehmung
- 42: Ausnehmung
- 44: Döpper
- 46: Spaltdichtung
- 48: Scheibe
- 50: Absatz
- 52: Sicherungsring
- 54: Sprengring
- 56: Bund
- 58: Sprengring
- 60: Gelenk
- 62: Betätigungsschalter
- 64: Innenverzahnung

## Patentansprüche

1. Handwerkzeugmaschine, insbesondere Bohr- und/oder Meißelhammer, mit einem Schlagwerk, über das ein Werkzeug (10) in einer Werkzeughalterung (12) schlagend antreibbar ist, die mit ihrem Grundkörper (14) lösbar an einem Antriebsteil (16) über zumindest einen Verriegelungskörper (18) befestigbar ist, der in seiner Eingriffsstellung von einem Sicherungskörper (20) radial fixierbar ist, welcher mit Hilfe eines Betätigungselements (22) zur Entriegelung der Werkzeughalterung (12) aus seiner Verriegelungsstellung in eine den Verriegelungskörper (18) radial freigebende Entriegelungsstellung führbar ist, wobei der Sicherungskörper (20) durch ein korrespondierendes Bauteil (14) beim Aufschieben der Werkzeughalterung (12) auf das Antriebsteil (16) in seine Entriegelungsstellung entgegen einer Federkraft eines Federelements (24) verschiebbar ist, **dadurch gekennzeichnet, daß** der Sicherungskörper (20) am Antriebsteil (16) verliersicher gehalten und durch das Betätigungselement (22) in Aufschieberichtung (26) der Werkzeughalterung (12) entgegen einer Federkraft eines Federelements (24) in seine Entriegelungsstellung führbar ist.

2. Handwerkzeugmaschine nach Anspruch 1, **dadurch gekennzeichnet, daß** der Grundkörper (14) der Werkzeughalterung (12) im befestigten Zustand zumindest einen Teil des Antriebsteils (16) umschließt.

3. Handwerkzeugmaschine nach Anspruch 2, **dadurch gekennzeichnet, daß** der Verriegelungskörper (18) am Grundkörper (14) der Werkzeughalterung (12) verliersicher gehalten ist.

4. Handwerkzeugmaschine nach Anspruch 3, **dadurch gekennzeichnet, daß** ein zumindest mit dem Antriebsteil (16) in Wirkverbindung stehendes Bauteil den Verriegelungskörper (18) beim Aufschieben der Werkzeughalterung (12) radial nach außen und der Verriegelungskörper (18) den Sicherungskörper (20) aus seiner Verriegelungsstellung in seine Entriegelungsstellung verschiebt.

5. Handwerkzeugmaschine nach Anspruch 4, **dadurch gekennzeichnet, daß** beim Aufschieben der Werkzeughalterung (12) eine an das Antriebsteil (16) angeformte Verzahnung (28) den Verriegelungskörper (18) radial nach außen verschiebt.

## Claims

1. Powered hand tool, in particular a hammer drill and/or rotary demolition hammer, having a percussion mechanism via which a tool (10) can be driven in a percussive manner in a tool holder (12) which, with its basic body (14), can be releasably fastened to a drive part (16) via at least one locking body (18), which can be radially fixed in its engagement position by a retaining body (20), which, for unlocking the tool holder (12), can be guided by means of an actuating element (22) from its locking position into an unlocking position radially releasing the locking body (18), it being possible for the retaining body (20) to be displaced into its unlocking position against a spring force of a spring element (24) by means of a corresponding component (14) when the tool holder (12) is pushed onto the drive part (16), **characterized in that** the retaining body (20) is captively held on the drive part (16) and can be guided into its unlocking position against a spring force of a spring element (24) by the actuating element (22) in the push-on direction (26) of the tool holder (12).

2. Powered hand tool according to Claim 1, **characterized in that** the basic body (14) of the tool holder (12), in the fastened state, encloses at least part of the drive part (16).

3. Powered hand tool according to Claim 2, **characterized in that** the locking body (18) is captively held on the basic body (14) of the tool holder (12).

4. Powered hand tool according to Claim 3, **characterized in that** a component which is in operative connection at least with the drive part (16) displaces the locking body (18) radially outwards when the tool body (12) is being pushed on, and the locking body (18) displaces the retaining body (20) from its locking position into its unlocking position.

5. Powered hand tool according to Claim 4, **characterized in that**, when the tool holder (12) is being pushed on, a tooth system (28) integrally formed on the drive part (16) displaces the locking body (18) radially outwards.

## Revendications

1. Machine-outil à main, en particulier marteau-foreur et/ou marteau-burineur, munie d'un système de percussion qui entraîne un outil (10) par percussion dans un porte-outil (12), fixé de façon amovible par son corps de base (14) à une pièce d'entraînement (16) par l'intermédiaire d'au moins un corps de verrouillage (18) qui peut être fixé radialement dans sa position de prise par un organe de sécurité (20) pouvant passer de sa position de verrouillage à une position de déverrouillage qui libère radialement le corps de verrouillage (18) à l'aide d'un élément de manoeuvre (22) pour déverrouiller le porte-outil (12), l'organe de sécurité (20) pouvant être déplacé dans sa position de déverrouillage par un composant (14) correspondant lorsque le porte-outil (12) est poussé sur la pièce d'entraînement (16) en s'opposant à une force de ressort d'un élément à ressort (24),
**caractérisée en ce que**
l'organe de sécurité (20) est maintenu sur la pièce d'entraînement (16) de façon à empêcher une perte et, par l'élément de manoeuvre (22), peut être amené dans sa position de déverrouillage dans le sens (26) où on pousse le porte-outil (12) en s'opposant à une force de ressort d'un élément à ressort (24).

2. Machine-outil à main selon la revendication 1,
**caractérisée en ce que**
à l'état fixé, le corps de base (14) du porte-outil (12) entoure au moins une partie de la pièce d'entraînement (16).

3. Machine-outil à main selon la revendication 2,
**caractérisée en ce que**
le corps de verrouillage (18) est maintenu sur le corps de base (14) du porte-outil (12) de façon à empêcher une perte.

4. Machine-outil à main selon la revendication 3,
**caractérisée en ce qu'**
un composant qui est en liaison active au moins avec la pièce d'entraînement (16) déplace le corps de verrouillage (18) radialement vers l'extérieur lorsque le porte-outil (12) est poussé et le corps de verrouillage (18) fait passer l'organe de sécurité (20) de sa position de verrouillage dans sa position de déverrouillage.

5. Machine-outil à main selon la revendication 4,
**caractérisée en ce que**
lorsqu'on pousse le porte-outil (12), une denture (28) façonnée sur la pièce d'entraînement (16) déplace le corps de verrouillage (18) radialement vers l'extérieur.
